# EUROPÄISCHE PATENTSCHRIFT

(11) **EP 1 396 645 B1**
(45) Veröffentlichungstag und Bekanntmachung des Hinweises auf die Patenterteilung: **06.12.2006**
(21) Anmeldenummer: 03103257.6
(22) Anmeldetag: 30.08.2003
(51) Int. Cl.: F16B 7/18, F16B 7/04

(54) **Vorrichtung zum winkligen Verbinden von Montageschienen**
Device for assembling mounting rails at an angle
Dispositif d'assemblage sous un angle de rails de montage

(30) Priorität: 05.09.2002 DE 10240999
(43) Veröffentlichungstag der Anmeldung: 10.03.2004
(73) Patentinhaber: HILTI Aktiengesellschaft, 9494 Schaan (LI)
(72) Erfinder: Hoffmann, Armin, 86899, Landsberg (DE)
(74) Vertreter: Wildi, Roland

(56) Entgegenhaltungen:
- DE-A- 2 504 721
- DE-A- 4 421 690
- DE-A- 10 052 577
- FR-A- 1 605 074
- US-A- 4 656 801

## Beschreibung

### Technisches Gebiet

Die Erfindung betrifft eine Vorrichtung zum winkligen Verbinden von Montageschienen, mit einem U-förmigen Verbindungselement, das an zumindest einer Seitenwand Öffnungen zur Durchführung eines Befestigungsmittels zum Festlegen des Verbindungselements an einer Montageschiene aufweist.

### Stand der Technik

Rohrinstallationen werden beispielsweise an Montageschienen befestigt, die z. B. an einer Decke angeordnet sind. Zur Installation von Rohrleitungen werden auch im Raum erstellte Konstruktionen verwendet, die aus einzelnen, zumeist standardisierten Profilen erstellt werden. Solche Konstruktionen sind beispielsweise aus mehreren, miteinander verbundenen C-förmigen Montageschienen zusammengesetzt. Es sind verschiedene Vorrichtungen zum Verbinden von Montageschienen bekannt, die eine Erstellung von zwei- und dreidimensionalen Konstruktionen aus Montageschienen ermöglichen. Jede Art von Verbindung benötigt speziell auf diese Verbindung ausgebildete Verbindungselemente.

In der DE 44 21 690 A1 ist ein Warenpräsentationssystem gezeigt, bei dem eine an einem Vertikalträger geführte und an diesem festlegbare Konsole ein von diesem abstehendes Hülsen- oder Muffenelement umfasst, in dem ein Innengewinde für eine Arretierschraube zum Feststellen der Konsole gegenüber der Vertikalschiene und ggf. zum Fixieren einer Halterung einschraubbar ist. An dem freien Ende des Muffenelementes können mehrere in Umfangsrichtung des Muffenelementes angeordnete Einrastnuten vorgesehen sein, in die Einrastelemente des Halteelementes eingreifen.

Die US 4,656,801 A zeigt eine Rahmenkonstruktion mit einem Eckverbinder zum winkligen Verbinden von drei, U-förmigen Trägern. An einem ersten Träger wird ein Positionierelement bspw. mittels Punktschweissen festgelegt. Das Positionierelement weist Vorsprünge in Form von Zungen oder Bolzen sowie eine mit einem Innengewinde versehene Öffnung für eine Schraube auf. Der zweite Träger weist in seinem Endbereich Ausschnitte zum Verbinden mit dem ersten Träger sowie Öffnungen für die Vorsprünge des Positionierelements und eine Durchführöffnung für die Schraube auf. Nach dem Zusammenführen durchdringen die Vorsprünge die Öffnungen im zweiten Träger und die Durchführöffnung stimmt mit der, mit dem Innengewinde versehene Öffnung des Positionierelements überein. Der dritte Träger weist in seinem Endbereich ebenfalls Öffnungen für die Vorsprünge des Positionierelements und eine Durchführöffnung für die Schraube auf. Nach dem Zusammenführen durchdringen die Vorsprünge die Öffnungen im zweiten Träger und die Durchführöffnung stimmt mit der, mit dem Innengewinde versehene Öffnung des Positionierelements überein. Zur Versteifung der Eckverbindung wird ein U-förmiges in den dritten Träger einführbares Element mit Ausnehmungen für die Vorsprünge des Positionierelements und einer Durchführöffnung für die Schraube angeordnet und die Eckverbindung mit einer Schraube verspannt. Alternativ weist das Positionierelement ebenfalls nur Ausnehmungen für Vorsprünge oder Bolzen auf, durch die an einem separaten Element vorgesehene Vorsprünge hindurchführbar sind, wobei an diesem Element eine Mutter für den Eingriff der, die Eckverbindung verspannende Schraube vorgesehen ist.

In der DE 100 52 577 A1 wird eine Verbindungsvorrichtung zum Verbinden von Montageschienen vorgeschlagen, die ein Basisteil und ein winkelförmiges Anbindeteil aufweist. Das Anbindeteil ist durch eine Rastverbindung lösbar mit dem Basisteil verbindbar. Das Anbindeteil weist vier Rastnocken auf, die in vier symmetrisch um die Befestigungsöffnung angeordnete Bohrungen in Eingriff bringbar sind.

Nachteilig an der bekannten Lösung ist, dass diese Verbindungsvorrichtung nur bedingt Torsionskräfte übernehmen kann. Des Weiteren sind die einzelnen Teile der bekannten Verbindungsvorrichtung, insbesondere des winkelförmigen Anbindeteils, aufwändig in der Herstellung.

### Darstellung der Erfindung

Der vorliegenden Erfindung liegt die Aufgabe zugrunde, eine Verbindungsvorrichtung zu schaffen, die eine geringe Anzahl von standardisierten Teilen aufweist, wobei diese Teile einfach herstellbar sind.

Die Aufgabe ist durch die Merkmale des Anspruchs 1 gelöst. Gemäss der Erfindung weist eine Vorrichtung zum winkligen Verbinden von Montageschienen, ein U-förmiges Verbindungselement auf, das an zumindest einer Seitenwand Öffnungen zur Durchführung eines Befestigungsmittels zum Festlegen des Verbindungselements an einer Montageschiene aufweist. Ein Befestigungsschild mit zumindest drei Verbiridungsmittel vorgesehen,die in dafür vorgesehene Einstecköffnungen an dem Verbindungselement einsteckbar sind, wobei die Einstecköffnungen an zumindest einem Endbereich des Verbindungselements vorgesehen sind und jede Seitenwand des Verbindungselements zumindest eine Einstecköffnung aufweist.

Das U-förmige Verbindungselement ist auf die verschiedenen Ausführungen der Montageschienen angepasst und kann entlang der Montageschiene positioniert sowie befestigt werden. Hauptsächlich werden zur Erstellung der Konstruktion C-förmige Montageschienen verwendet. Mittels sogenannten Schienenmuttern, die beispielsweise für Rohrinstattatiönen an Montageschienen verwendet werden, wird das U-förmige Verbindungselement an der Montageschiene in der, gewünschten Position fixiert. Beispielsweise werden als Schienenmuttern Schnellspannmuttern verwendet.

Das Befestigungsschild ist flächig und kann mittels der drei Verbindungsmittel über die Einsteckausnehmungen an dem Verbindungselement angeordnet werden, so dass eine Verbindungsvorrichtung geschaffen ist, die eine hohe Torsionssteifigkeit aufweist. Vorzugsweise weisen alle drei Seitenwände des U-förmigen Verbindungselements Öffnungen zur Durchführung der Befestigungsmittels auf. Eine beispielsweise waagrecht ausgerichtete Montageschiene kann z. B. in drei verschiedenen Stellungen an dem Verbindungselement fixiert werden, wobei die offene Seite des Verbinduhgsetements jeweils nach oben ausgerichtet sein kann, was eine sichere Verbindung der Montageschiene mit einer weiteren Montageschiene oder einem Untergrund sicherstellt.

Für die Herstellung der erfindungsgemässen Verbindungsvorrichtung bedeutet die Reduktion der Anzahl Teile auf zwei anstelle vieler verschiedener Elemente eine wirtschaftlichere Herstellung gegenüber dem Stand der Technik. Ausserdem vereinfacht sich die Lagerhaltung, da anstelle einer Vielzahl von Elementen nur zwei Elemente vorliegen. Selbst die Planung für den Anwender gestaltet sich gegenüber dem bekannten Stand der Technik einfacher und flexibler. Die erstellte Verbindung ist lösbar und die gesamte Verbindungsvorrichtung sowie das Verbindungselement und das Befestigungsschild als Einzelelement können wiederverwendet werden.

Ist das Verbindungselement an einem Ende der anzuschliessenden Montageschiene vorgesehen, bildet das Befestigungsschild den stirnseitigen Abschluss und ermöglicht die Befestigung der Verbindungsvorrichtung. Das Ende der Montageschiene wird bei dieser Anordnung der Verbindungsvorrichtung dreiseitig umfasst und gehalten, was eine hohe Torsionssteifigkeit der Verbindung am Ende der, von dem Verbindungselement gehaltenen, Montageschiene sicherstellt. Da jede Seitenwand des Verbindungselements zumindest eine Einstecköffnung aufweist, ist das Befestigungsschild zumindest an drei Punkten an dem Verbindungselement in seiner Position gehalten.

Bevorzugt weist das Befestigungsschild Einstecknasen auf, die in die Einstecköffnungen einsteckbar sind. Die Einstecknasen sind vorzugsweise als Vorsprünge an dem Befestigungsschild ausgebildet und in deren Ausgestaltung auf die Ausgestaltung der Einstecköffnungen angepasst. Bevorzugt weist das Verbindungselement an den im Wesentlichen parallel verlaufenden Seitenwänden des U-förmigen Verbindungselements Einstecköffnungen auf, die an der freien Kante der entsprechenden Seitenwand offen sind. An der Seitenwand des U-förmigen Verbindungselements, die die im Wesentlichen parallel verlaufenden Seitenwände verbindet, ist vorzugsweise ein Durchbruch oder zumindest eine Vertiefung vorgesehen. Der Durchbruch, beziehungsweise die Vertiefung kann beispielsweise rechteckig oder kreisförmig ausgebildet sein.

Die Einstecköffnungen an den im Wesentlichen parallel verlaufenden Seitenwänden des U-förmigen Verbindungselements weisen vorzugsweise zumindest in einem Teilbereich als Rastnasen ausgebildete Vorsprünge zur Bildung eines verengten Querschnitt auf, so dass zwischen den Einstecknasen und den Einstecköffnungen eine Rastverbindung entstehen kann. Beim Verspannen des Befestigungsmittels werden die Einstecknasen und die Einstecköffnungen miteinander verspannt, wodurch eine sichere Verbindung zwischen dem Verbindungselement und dem Befestigungsschild geschaffen wird. Die Einstecknasen an dem Befestigungsschild weisen vorzugsweise jeweils eine Aufnahme auf, die die Wandung der entsprechenden Seitenwand umgreifen kann.

Vorteilhafterweise ist an zumindest einer Seitenwand des Verbindungselements zumindest eine weitere Öffnung zur Durchführung eines Befestigungsmittels und an dem Befestigungsschild ist zumindest eine Öffnung zur Durchführung eines Befestigungsmittels vorgesehen. In einer bevorzugten Ausführungsform weist jede Seitenwand des Verbindungselements eine weitere Öffnung zur Durchführung eines Befestigungsmittels auf. Mittels der Öffnung im Befestigungsschild und der weiteren Öffnung an den Seitenwänden des Verbindungselements kann ein Befestigungsschild an einer der Seitenwände eines Verbindungselements befestigt werden. Damit wird eine winklige Verbindung zwischen zwei Verbindungselementen, beziehungsweise zwischen zwei Montageschienen geschaffen. Für eine Verbindung zwischen zwei Verbindungselementen wird entlang einer ersten Montageschiene ein erstes Verbindungselement positioniert und an der ersten Montageschiene fixiert. An einem Ende eines zweiten Verbindungselements wird ein Befestigungsschild an dem Verbindungselement angeordnet. Mit dem Befestigungsmittel, das durch die Öffnung im Befestigungsschild und durch die weitere Öffnung in der Seitenwand des ersten Verbindungselements hindurchgeführt ist, werden die beiden Verbindungselemente miteinander verbunden. Durch Verspannen des Befestigungsmittels wird eine sichere Verbindung zwischen den einzelnen, miteinander verbundenen Teilen geschaffen. Anschliessend wird eine zweite Montageschiene an dem zweiten Verbindungselement fixiert.

In einer Variante dazu wird das Befestigungsschild an einem Ende des zweiten Verbindungselements angeordnet und die erfindungsgemässe Verbindungsvorrichtung an dem einen Ende der anzuschliessenden zweiten Montageschiene fixiert. Bei diesem Vorgehen bildet das Befestigungsschild den stirnseitigen Abschluss der zweiten Montageschiene in Richtung der Verbindung. Anschliessend wird die Montageschiene mit der Verbindungsvorrichtung an das erste, bereits an der ersten Montageschiene fixierte Verbindungselement angeordnet. Mit dem Verspannen des Befestigungsmittels, das durch die Öffnung im Befestigungsschild und durch die weitere Öffnung in der Seitenwand des ersten Verbindungselements hindurchgeführt ist, wird eine sichere Verbindung zwischen den einzelnen, miteinander verbundenen Teilen geschaffen.

Bevorzugt weist die zumindest eine weitere Öffnung zur Durchführung des Befestigungsmittels an zumindest einer Seitenwand des Verbindungselements einen Kragen auf. Vorzugsweise ist an jeder Seitenwand des Verbindungselements eine weitere Öffnung zur Durchführung eines Befestigungsmittels vorgesehen. Der Kragen dient einerseits der Zentrierung und Führung der zu verbindenden Teile von mehreren erfindungsgemässen Verbindungsvorrichtungen sowie andererseits als Tragelement der geschaffenen Verbindung, insbesondere zur Übernahme von Scherkräften, die auf die Verbindung wirken können. Des Weiteren kann der Kragen zumindest bereichsweise einen Konusabschnitt aufweisen, so dass beim Verspannen des Befestigungsmittels neben einer kraftschlüssigen auch eine formschlüssige Verbindung beispielsweise zwischen einem senkrecht ausgerichteten Verbindungselement und einem, mit einem Befestigungsschild versehenen, waagrecht ausgerichteten Verbindungselement geschaffen wird. Die Aussenfläche des Kragens kann zusätzlich mit einer Profilierung, beispielsweise mit einer Rändelung versehen sein.

Vorzugsweise umfasst das Befestigungsmittel ein Schraubmittel, und die zumindest eine weitere Öffnung zur Durchführung des Befestigungsmittels an dem Verbindungselement weist ein Innengewinde auf. Das Schraubmittel umfasst beispielsweise eine Schraube, die mit dem Innengewinde an der Seitenwand des Verbindungselements in Eingriff bringbar ist. Ist die Öffnung am Verbindungselement mit einem Kragen versehen, weist das Innengewinde mehr Gewindegänge auf, womit ein erhöhter Ausreisswiderstand für das Schraubmittel vorhanden ist. Die Länge des Schraubmittels ist vorzugsweise derart gewählt, dass das Schraubmittel mit seinem, in Gegenrichtung zu der Verspannungsrichtung liegenden Ende nicht die Ebene durchdringt, die durch die Aussenfläche der Montageschiene gebildet wird, an der die Verbindungsvorrichtung angeordnet ist. Damit muss im Bereich der Verbindung die Montageschiene keine Öffnung für das, in das Verbindungselement eingreifende Befestigungselement aufweisen und die erfindungsgemässe Verbindungsvorrichtung kann entlang der gesamten Montageschiene angeordnet werden.

Vorzugsweise ist an zumindest einer Seitenwand des Verbindungselements zumindest eine Vertiefung, optional zumindest eine Öffnung als Gegenrastmittel vorgesehen, und an dem Befestigungsschild ist zumindest ein Zapfen als Rastmittel vorgesehen, der mit der zumindest einen Vertiefung, beziehungsweise mit der zumindest einen Öffnung an dem Verbindungselement in Eingriff bringbar ist. Anstelle von Zapfen können an dem Befestigungsschild Ausprägungen vorgesehen werden, die in die zumindest eine Vertiefung, beziehungsweise in die zumindest eine Öffnung, in Eingriff bringbar ist. Mit dem Rast- und Gegenrastmittel wird eine lösbare Rastverbindung geschaffen, die beispielsweise eine nachträgliche Korrektur der Ausrichtung mehrerer Verbindungsvorrichtungen untereinander ermöglicht. Ausserdem ist die Verwendung einer Rastverbindung vorteilhaft, da sich die Handhabung der Verbindungsvorrichtung für einen Anwender erheblich vereinfacht, da bestimmte Positionen der Verbindungsvorrichtungen untereinander damit vorgegeben sind. Ferner unterbindet die Rastverbindung ein Verdrehen der Teile gegeneinander in der befestigten Position.

Die Ausbildung von Vertiefungen, beziehungsweise Öffnungen und Zapfen, beziehungsweise Ausprägungen ist herstellungstechnisch einfach und wirtschaftlich. Beispielsweise sind die Öffnungen als Bohrungen und die Zapfen als zylindrische Vorsprünge ausgebildet, die in die Bohrungen in Eingriff bringbar sind. Die Zahl der Vertiefungen, beziehungsweise Öffnungen legt den Raster der Rastverbindung fest. Je höher die Zahl der Vertiefungen, beziehungsweise Öffnungen, desto mehr Positionen sind für den Anwender mittels der Rastverbindung verwendbar. Jedoch steigt mit der Zahl der Positionen die Schwierigkeit, in kurzer Zeit die gewünschte Stellung auszuwählen.

Bevorzugt sind an zumindest einer Seitenwand des Verbindungselements mehrere Vertiefungen, beziehungsweise mehrere Öffnungen und an dem Befestigungsschild sind mehrere Zapfen vorgesehen. In einer bevorzugten Ausführungsform weist das Verbindungselement zumindest vier symmetrische, um die weitere Öffnung am Verbindungselement zur Durchführung des Befestigungsmittels angeordnete Bohrungen auf, die in Eingriff mit vier, symmetrisch um die Öffnung zur Durchführung des Befestigungsmittels am Befestigungsschild angeordnete Zapfen bringbar sind. Somit ist eine Verbindungsvorrichtung gegenüber einem Verbindungselement beispielsweise bei vier Ausnehmungen jeweils um 90° verdreht positionierbar. Durch die mittige Anordnung der Öffnungen zur Durchführung des Befestigungsmittels ist ein gleichmässiger Eingriff zwischen Zapfen und Öffnungen sichergestellt und ausserdem eine allenfalls angreifende Last gleichmässig auf die Rastverbindung verteilt. Die Vertiefungen, beziehungsweise die Öffnungen sind vorzugsweise quer zur Längsrichtung mittig auf dem Verbindungselement und dem Befestigungsschild angeordnet, um möglichst viele Verbindungsmöglichkeiten zwischen einer Verbindungsvorrichtung und einem Verbindungselement zu schaffen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Ein erfindungsgemässes Verbindungselement in Perspektivdarstellung;
- Fig.2: eine Perspektivdarstellung auf eine erste Seite des erfindungsgemässen Befestigungsschilds;
- Fig. 3: eine Perspektivdarstellung auf eine zweite Seite des erfindungsgemässen Befestigungsschilds;
- Fig. 4: eine Perspektivdarstellung auf die erfindungsgemässe Verbindungsvorrichtung; und
- Fig. 5: eine Perspektivdarstellung auf einen Schienenknoten aus mehreren, erfindungsgemässen Verbindungsvorrichtungen.

Grundsätzlich sind in den Figuren gleiche Teile mit den gleichen Bezugszeichen versehen.

### Wege zur Ausführung der Erfindung

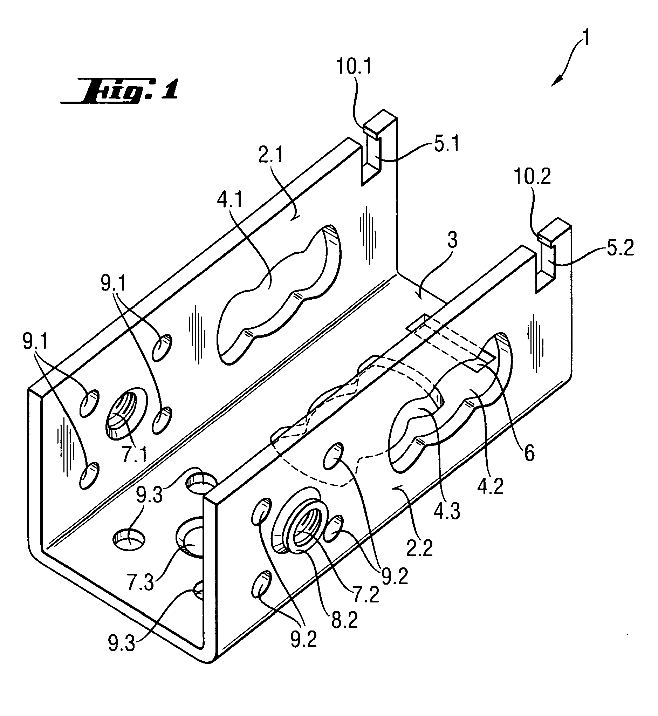

Fig. 1 zeigt eine Perspektivdarstellung auf das erfindungsgemässe Verbindungselement. Das U-förmige Verbindungselement 1 weist zwei parallel zueinander verlaufende Seitenwände 2.1 und 2.2 sowie eine, die beiden Seitenwände 2.1 und 2.2 verbindende, dritte Seitenwand 3 auf. An den Seitenwänden 2.1, 2.2 und 3 ist jeweils eine Öffnung 4.1, 4.2 bzw. 4.3 zur Durchführung einer Schienenmutter angeordnet. Mittels der Schienenmutter (hier nicht dargestellt) wird das Verbindungselement positioniert an einer Montageschiene fixiert. An den parallel zueinander verlaufenden Seitenwänden 2.1 und 2.2 ist an einem Endbereich des Verbindungselements 1 jeweils eine Einstecköffnung 5.1 bzw. 5.2 ausgebildet. Die Einstecköffnungen 5.1 und 5.2 weisen im Bereich des freien Randes Rastnasen 10.1 und 10.2 auf, die den Querschnitt in der Ebene der Seitenwand 2.1 bzw. 2.2 örtlich verengen. Die dritte Seitenwand 3 ist mit einer Einstecköffnung 6 versehen.

An den Seitenwänden 2.1, 2.2 und 3 ist jeweils eine weitere Öffnung 7.1, 7.2 bzw. 7.3 zur Durchführung einer Schraube vorgesehen. Die Öffnungen 7.1, 7.2 und 7.3 sind mit einem Innengewinde versehen, in das das Befestigungsmittel (hier die Schraube 25) eingreifen kann. Jede Öffnung 7.1, 7.2 und 7.3 weist an der Aussenseite der entsprechenden Seitenwand 2.1, 2.2 bzw. 3 des Verbindungselements 1 einen Kragen (z. B. den Kragen 8.2) auf. Jeder dieser Kragen (z. B. 8.2) ist mit einem Konusabschnitt versehen. Symmetrisch um jede weitere Öffnung 7.1, 7.2 und 7.3 sind jeweils vier Bohrungen 9.1, 9.2 bzw. 9.3 vorgesehen, die als Gegenrastmittel für ein, mit Rastmittel versehenes Befestigungsschild ausgebildet sind. Der Kragen (z. B. der Kragen 8.2) und die Rastverbindung ergeben eine hohe Sicherheit der Verbindung gegen Versagen, insbesondere bezüglich auf die Verbindung wirkende Scherkräfte.

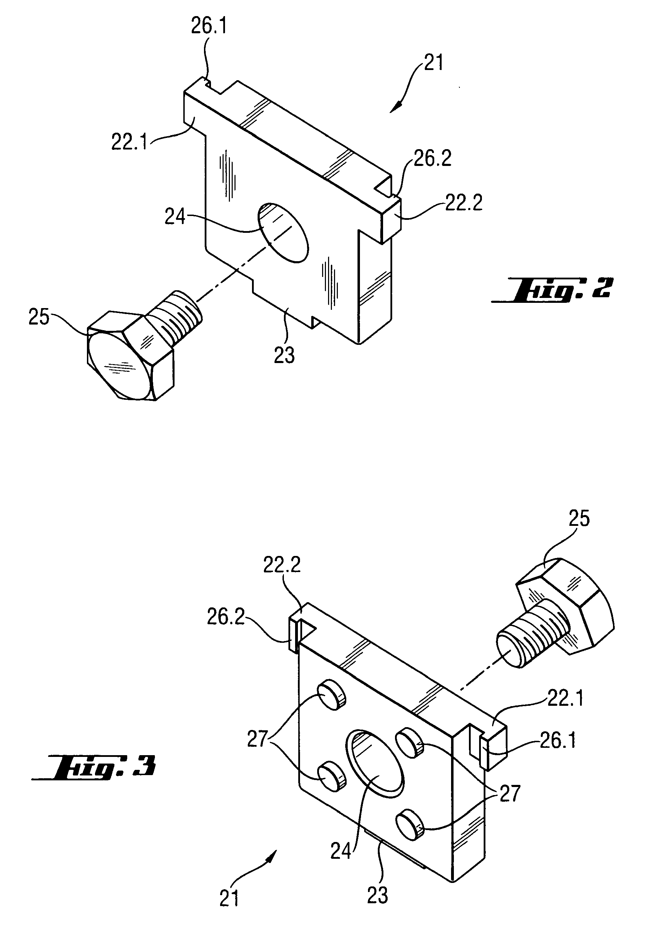

Eine Perspektivdarstellung auf eine erste Seite des erfindungsgemässen Befestigungsschilds ist in Fig. 2 dargestellt. Das Befestigungsschild 21 ist flächig ausgebildet und mit zwei Einstecknasen 22.1 und 22.2, die mit den Einstecköffnungen 5.1 und 5.2 und Rastnasen 10.1 und 10.2 in den Seitenwänden 2.1 bzw. 2.2 des Verbindungselements 1 in Eingriff bringbar sind, sowie eine Einstecknase 23 versehen, die mit der Einstecköffnung 6 in der Seitenwand 3 des Verbindungselements 1 in Eingriff bringbar ist. Das Befestigungsschild 21 weist weiter eine Bohrung 24 zur Durchführung der Schraube 25 auf.

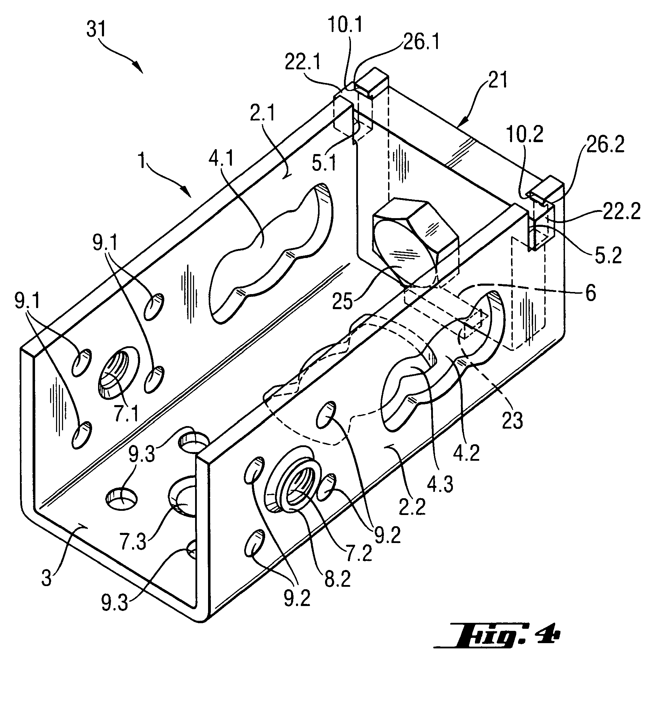

ln Fig. 3 ist eine Perspektivdarstellung auf eine zweite Seite des erfindungsgemässen Befestigungsschilds gezeigt. Die Einstecknasen 22.1 und 22.2 sind an deren äusseren Enden mit Vorsprüngen 26.1 und 26.2 versehen, die jeweils eine U-förmige Aufnahme an den Einstecknasen 22.1 bzw. 22.2 ausbilden. Die Grösse der U-förmigen Aufnahme entspricht zumindest der Wandstärke der Seitenwand 2.1 bzw. 2.2 des Verbindungselements 1. An dieser Seite des Befestigungsschilds 21 sind vier Zapfen 27 vorgesehen, die die Rastmittel bilden und die in die Bohrungen 9.1, 9.2 und 9.3 am Verbindungselement 1 in Eingriff bringbar sind. Die Zapfen 27 können in vier Stellungen, jeweils um 90° gedreht, an einer der drei Seitenwände 2.1, 2.2 oder 3 des Verbindungselements 1 vorgesehen werden.

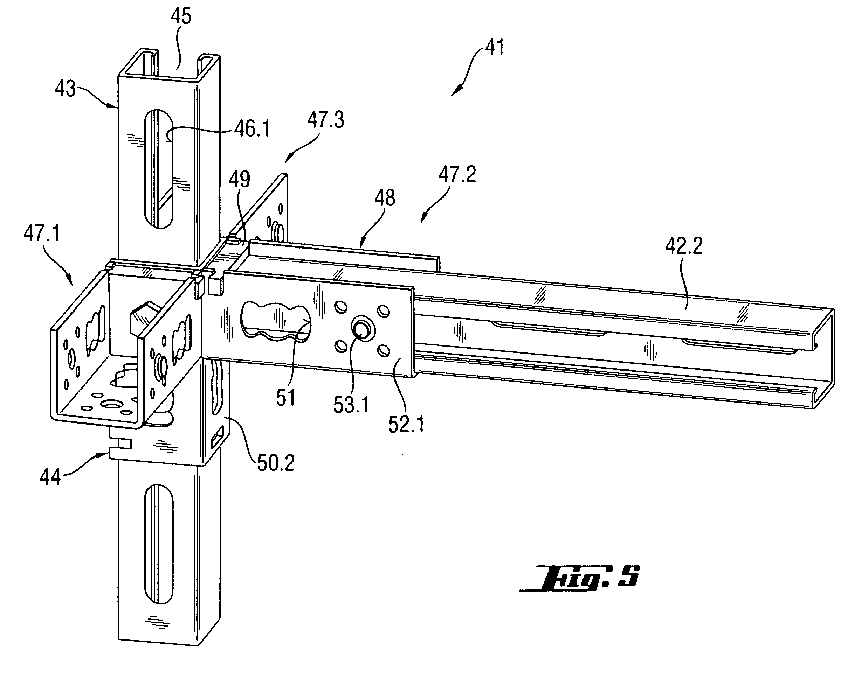

Fig. 4 zeigt eine Perspektivdarstellung auf die erfindungsgemässe Verbindungsvorrichtung. Die Verbindungsvorrichtung 31 umfasst ein Verbindungselement 1 und ein Befestigungsschild 21, das in die Einstecköffnungen 5.1, 5.2 und 6 eingesetzt ist. Mit der Kombination des örtlich verengten Querschnitts der Einstecköffnungen 5.1 und 5.2 und den, die Wandung der Seitenwand 2.1 und 2.2 umgreifenden Einstecknasen 22.1 und 22.2 wird eine sichere Verbindung zwischen dem Verbindungselement 1 und dem Befestigungsschild 21 bei der Verspannung der Schraube 25 geschaffen. Die Verbindungsvorrichtung 31 kann beispielsweise an einem anderen Verbindungselement 1 über das Befestigungsschild 21 befestigt werden.

Eine Perspektivdarstellung auf einen Schienenknoten aus mehreren, erfindungsgemässen Verbindungsvorrichtungen ist in der Fig. 5 dargestellt. Mittels des Schienenknotens 41 sollen drei, waagrecht ausgerichtete C-förmige Montageschienen an einer vertikal ausgerichteten C-förmigen Montageschiene 43 angeschlossen werden. Aus Gründen der Übersichtlichkeit und Verständlichkeit der dargestellten Ansicht ist neben der vertikal ausgerichteten Montageschiene 43 nur die waagrecht ausgerichtete Montageschiene 42.2 dargestellt. Die nachfolgenden Ausführungen gelten für weitere, beispielsweise waagrecht ausgerichtete Montageschienen sinngemäss.

In einem ersten Schritt wird das U-förmige Verbindungselement 44, das entsprechend dem zuvor beschriebenen Verbindungselement 1 ausgebildet ist, in der Höhe an der vertikal ausgerichteten, C-förmigen Montageschiene 43 fixiert. Die Fixierung des Verbindungselements 44 erfolgt beispielsweise mit einer Schienenmutter, die durch die Öffnung zur Befestigung des Verbindungselements 44 an der offenen Seite 45 der Montageschiene 43 hindurchgeführt und mittels einer Drehung verspannt wird. Da die Montageschienen 43 und 42.2 auch an anderen Seitenwänden des C-förmigen Profils Öffnungen (z. B. die Öffnung 46.1 an der Montageschiene 43) aufweisen, kann die Fixierung des Verbindungselements 44 mit einem geeigneten Befestigungsmittel in diesen Öffnungen erfolgen.

An den drei Seitenwänden des Verbindungselements 44 sind drei erfindungsgemässe Verbindungsvorrichtungen 47.1, 47.2 und 47.3 angeschlossen. Nachfolgend wird, stellvertretend für alle drei Verbindungsvorrichtungen 47.1, 47.2 und 47.3, das weitere Vorgehen an der Verbindungsvorrichtung 47.2 beschrieben. Die Verbindungsvorrichtung 47.2 umfasst das Verbindungselement 48, das analog den übrigen Verbindungselementen (z. B. Verbindungselement 1 oder 44) ausgebildet ist, und das Befestigungsschild 49, das analog dem zuvor beschriebenen Befestigungsschild 21 ausgebildet ist. Das Befestigungsschild 49 wird in das Verbindungselement 48 eingesetzt und die Verbindungsvorrichtung 47.2 an der Seitenwand 50.2 angeschlossen. Die Zapfen des Befestigungsschilds 49 greifen in die Bohrungen ein, die um die Befestigungsöffnung an der Seitenwand 50.2 des Verbindungselements 44 ausgebildet sind. Die gezeigte Ausrichtung der Verbindungsvorrichtung 47.2 mit der offenen Seite nach oben ist eine Möglichkeit der Ausrichtung der Verbindungsvorrichtung 47.2 an dem Verbindungselement 44. Des Weiteren kann die Verbindungsvorrichtung 47.2 bei der Anordnung von vier symmetrisch angeordneten Bohrungen und vier, mit den Bohrungen in Eingriff bringbaren Zapfen jeweils um 90° verdreht an dem Verbindungselement 44 angeordnet werden.

Mittels einer Schraube in dem Befestigungsschild 49 wird die Verbindungsvorrichtung 47.2 an dem Verbindungselement 44 fixiert und gleichzeitig das Befestigungsschild 49 mit dem Verbindungselement 48 verspannt. Die mit der Montageschiene 43 zu verbindende Montageschiene 42.2 wird in das Verbindungselement 48 eingelegt und nach deren Ausrichtung an dem Verbindungselement 48 fixiert. Beispielsweise durch die Öffnung 51 an der Seitenwand 52.1 des Verbindungselements 48 wird zur Fixierung der Montageschiene 42.2 eine Schienenmutter hindurchgeführt und verspannt.

Damit mit einem Typ von Montageschienen höhere Belastungen aufgenommen werden können, die eine einzelne Montageschiene nicht oder nur bedingt übernehmen kann, werden beispielsweise zwei Montageschienen parallel zueinander angeordnet. Mit den erfindungsgemässen Verbindungsvorrichtungen können auch solche Konstruktionen verwirklicht werden. An der Befestigungsöffnung 53.1 wird dazu eine parallel zur Verbindungsvorrichtung 47.1 ausgerichtete, weitere erfindungsgemässe Verbindungsvorrichtung vorgesehen, so dass zwei Aufnahmen für zwei parallel zueinander verlaufende Montageschienen vorhanden sind.

Des Weiteren kann ein Verbindungselement entlang einer waagrecht ausgerichteten Montageschiene positioniert und mittels einer Schienenmutter an dieser Montageschiene fixiert werden. Anschliessend stehen drei Möglichkeiten für einen winkligen Anschluss einer weiteren Montageschiene im Raum zur Verfügung.

Das Befestigungsschild kann zur Schaffung von einer nicht rechtwinkligen Verbindung zweier Montageschienen beispielsweise eine, in Richtung der unteren Einstecknase, zunehmende Wandstärke aufweisen. Bei dieser Ausführungsform des Befestigungsschilds ist das, mit diesem Befestigungsschild die Verbindungsvorrichtung bildende, Verbindungselement in einem gemäss diesem Befestigungsschild definierten Winkel ausgerichtet.

Zusammenfassend ist festzustellen, dass eine Verbindungsvorrichtung geschaffen wurde, die eine geringe Anzahl von standardisierten Teilen aufweist. Mit den erfindungsgemässen Verbindungsvorrichtungen können eine Vielzahl von unterschiedlich ausgebildeten Konstruktionen erstellt werden, wobei die einzelnen Verbindungen einfach ausführbar sind und eine hohe Sicherheit der Verbindung aufweisen. Die Teile der Verbindungsvorrichtung sind kostengünstig und einfach herstellbar.

## Patentansprüche

1. Vorrichtung zum winkligen Verbinden von Montageschienen (42.2, 43), mit einem U-förmigen Verbindungselement (1; 48), das an zumindest einer Seitenwand (2.1, 2.2, 3; 52.1) Öffnungen (4.1, 4.2, 4.3; 51) zur Durchführung eines Befestigungsmittels zum Festlegen des Verbindungselements (1; 48) an einer Montageschiene (42.2, 43) aufweist, **dadurch gekennzeichnet, dass** ein Befestigungsschild (21; 49) mit drei Verbindungsmittel vorgesehen ist, die in dafür vorgesehene Einstecköffnungen (5.1, 5.2, 6) an dem Verbindungselement (1; 48) einsteckbar sind, wobei
die Einstecköffnungen (5.1, 5.2, 6) an zumindest einem Endbereich des Verbindungselements (1; 48) vorgesehen sind, und jede Seitenwand (2.1, 2.2, 3; 52.1) des Verbindungselements (1; 48) zumindest eine Einstecköffnung (5.1, 5.2, 6) aufweist.

2. Vorrichtung nach Anspruch 1, **dadurch gekennzeichnet, dass** das Befestigungsschild als Verbindungsmittel ausgebildete Einstecknasen (22.1, 22.2, 23) aufweist, die in die Einstecköffnungen (5.1, 5.2, 6) einsteckbar sind.

3. Vorrichtung nach Anspruch 1 oder 2, **dadurch gekennzeichnet, dass** an zumindest einer Seitenwand (2.1, 2.2, 3; 52.1) des Verbindungselements (1; 48) zumindest eine weitere Öffnung (7.1, 7.2, 7.3) zur Durchführung eines Befestigungsmittels vorgesehen ist, und dass an dem Befestigungsschild (21; 49) zumindest eine Öffnung (24) zur Durchführung eines Befestigungsmittels vorgesehen ist.

4. Vorrichtung nach Anspruch 3, **dadurch gekennzeichnet, dass** die zumindest eine weitere Öffnung (7.1, 7.2, 7.3; 53.1) zur Durchführung des Befestigungsmittels an zumindest einer Seitenwand (2.1, 2.2, 3; 52.1) des Verbindungselements (1; 48) einen Kragen (8.2) aufweist.

5. Vorrichtung nach Anspruch 3 oder 4, **dadurch gekennzeichnet, dass** die zumindest eine weitere Öffnung (7.1, 7.2, 7.3; 53.1) zur Durchführung des Befestigungsmittels, wie eine Schraube (25), ein Innengewinde aufweist.

6. Vorrichtung nach einem der Ansprüche 1 bis 5, **dadurch gekennzeichnet, dass** an zumindest einer Seitenwand (2.1, 2.2, 3; 52.1) des Verbindungselements (1; 48) zumindest eine Vertiefung, optional zumindest eine Öffnung (9.1, 9.2, 9.3) vorgesehen ist, und dass an dem Befestigungsschild (21; 49) zumindest ein Zapfen (27) vorgesehen ist, der mit der zumindest einen Vertiefung, beziehungsweise mit der zumindest einen Öffnung (9.1, 9.2, 9.3) an dem Verbindungselement (1; 48) in Eingriff bringbar ist.

7. Vorrichtung nach Anspruch 6, **dadurch gekennzeichnet, dass** an zumindest einer Seitenwand (2.1, 2.2, 3; 52.1) des Verbindungselements (1; 48) mehrere Vertiefungen, beziehungsweise mehrere Öffnungen (9.1, 9.2, 9.3) vorgesehen sind, und dass an dem Befestigungsschild (21; 49) mehrere Zapfen (27) vorgesehen sind.

## Claims

1. Device for the angular connection of mounting rails (42.2, 43), comprising a U-shaped connecting element (1; 48) provided on at least on side wall (2.1, 2.2, 3; 52.1) with openings (4.1, 4.2, 4.3; 51) for the passage of a fastening means for fixing the connecting element (1; 48) to a mounting rail (42.2, 43), **characterised by** a fastening plate (21; 49) with three connecting means which can be inserted into insertion openings (5.1, 5.2, 6) provided to that end in the connecting element (1; 48), the insertion openings (5.1, 5.2, 6) being provided in at least one end region of the connecting element (1; 48) and each side wall (2.1, 2.2, 3; 52.1) of the connecting element (1; 48) having at least one insertion opening (5.1, 5.2, 6).

2. Device according to claim 1, **characterised in that** the fastening plate has insertion lugs (22.1, 22.2, 23) designed as connecting means which can be inserted into the insertion openings (5.1, 5.2, 6).

3. Device according to claim 1 or claim 2, **characterised in that** at least one further opening (7.1, 7.2, 7.3) is provided in at least one side wall (2.1, 2.2, 3; 52.1) of the connecting element (1; 48) for the passage of a fastening means and that at least one opening (24) is provided in the fastening plate (21; 49) for the passage of a fastening means.

4. Device according to claim 3, **characterised in that** the at least one further opening (7.1, 7.2, 7.3; 53.1) for the passage of the fastening means is provided on at least one side wall (2.1, 2.2, 3; 52.1) of the connecting element (1; 48) with a collar (8.2).

5. Device according to claim 3 or claim 4, **characterised in that** the at least one further opening (7.1, 7.2, 7.3; 53.1) for the passage of the fastening means, such as a screw (25), has an internal thread.

6. Device according to one of claims 1 to 5, **characterised in that** at least one recess, optionally at least one opening (9.1, 9.2, 9.3), is provided in at least one side wall (2.1, 2.2, 3; 52.1) of the connecting element (1; 48) and that at least one pin (27) which can be brought into engagement with the at least one recess or with the at least one opening (9.1, 9.2, 9.3) in the connecting element (1; 48) is provided on the fastening plate (21; 49).

7. Device according to claim 6, **characterised in that** a plurality of recesses or a plurality of openings (9.1, 9.2, 9.3) are provided in at least one side wall (2.1, 2.2, 3; 52.1) of the connecting element (1; 48) and that a plurality of pins (27) are provided on the fastening plate (21; 49).

## Revendications

1. Dispositif pour la liaison selon un angle de rails de montage (42.2, 43), comprenant un élément de liaison en U (1 ; 48) pourvu, sur au moins une paroi latérale (2.1, 2.2, 3 ; 52.1), d'ouvertures (4.1, 4.2, 4.3 ; 51) pour le passage d'un moyen de fixation destiné à assujettir l'élément de liaison (1 ; 48) à un rail de montage (42.2, 43), **caractérisé en ce qu'**une plaquette de fixation (21 ; 49) est munie de trois moyens de liaison qui sont insérables dans les ouvertures d'insertion (5.1, 5.2, 6) prévues à cet effet dans l'élément de liaison (1 ; 48), les ouvertures d'insertion (5.1, 5.2, 6) étant situées dans au moins une zone d'extrémité de l'élément de liaison (1 ; 48), et chaque paroi latérale (2.1, 2.2, 3 ; 52.1) de l'élément de liaison (1 ; 48) étant pourvue d'au moins une ouverture d'insertion (5.1, 5.2, 6).

2. Dispositif selon la revendication 1, **caractérisé en ce que** la plaquette de fixation comporte des talons d'insertion (22.1, 22.2, 23) conformés en moyens de liaison et insérables dans les ouvertures d'insertion (5.1, 5.2, 6).

3. Dispositif selon la revendication 1 ou 2, **caractérisé en ce que** sur au moins une paroi latérale (2.1, 2.2, 3 ; 52.1) de l'élément de liaison (1 ; 48) est ménagée au moins une ouverture supplémentaire (7.1, 7.2, 7.3) pour recevoir un moyen de fixation, et **en ce que** sur la plaquette de fixation (21 ; 49) est prévue au moins une ouverture (24) pour recevoir un moyen de fixation.

4. Dispositif selon la revendication 3, **caractérisé en ce que** l'ouverture supplémentaire au nombre d'au moins une (7.1, 7.2, 7.3 ; 53.1) pour recevoir le moyen de fixation sur au moins une paroi latérale (2.1, 2.2, 3 ; 52.1) de l'élément de liaison (1 ; 48) comporte un collet (8.2).

5. Dispositif selon la revendication 3 ou 4, **caractérisé en ce qu'**au moins une ouverture supplémentaire (7.1, 7.2, 7.3 ; 53.1) comporte un taraudage pour recevoir le moyen de fixation tel qu'une vis (25).

6. Dispositif selon une des revendications 1 à 5, **caractérisé en ce que** sur au moins une paroi latérale (2.1, 2.2, 3 ; 52.1) de l'élément de liaison (1 ; 48) est prévu au moins un creux, optionnellement au moins une ouverture (9.1, 9.2, 9.3), et **en ce que** sur la plaquette de fixation (21 ; 49) est prévu au moins un plot (27) qui peut être amené en prise avec le creux au nombre d'au moins un, respectivement avec l'ouverture au nombre d'au moins une (9.1, 9.2, 9.3) de l'élément de liaison (1 ; 48).

7. Dispositif selon la revendication 6, **caractérisé en ce que** sur au moins une paroi latérale (2.1, 2.2, 3 ; 52.1) de l'élément de liaison (1 ; 48) sont prévus plusieurs creux, respectivement plusieurs ouvertures (9.1, 9.2, 9.3), et **en ce que** sur la plaquette de fixation (21 ; 49) sont prévus plusieurs plots (27).
